Europäisches Patentamt

European Patent Office

Office européen des brevets

(11) Publication number: **0 403 702**
**A1**

# (12) EUROPEAN PATENT APPLICATION

(21) Application number: 89306307.3

(51) Int. Cl.<sup>5</sup>: **B62B 3/10**

(22) Date of filing: 22.06.89

(43) Date of publication of application:
27.12.90 Bulletin 90/52

(84) Designated Contracting States:
AT BE CH DE ES FR GB GR IT LI LU NL SE

(71) Applicant: **Ribeiro, Carlos Jorge Duarte**
**7 Priestlands Place**
**Lymington Hampshire SO41 9GA(GB)**

(72) Inventor: **Ribeiro, Carlos Jorge Duarte**
**7 Priestlands Place**
**Lymington Hampshire SO41 9GA(GB)**

(74) Representative: **Lomas, Geoffrey Michael et al**
**J A Boutland with Barker, Brettell & Duncan**
**Prudential Buildings 97-101 Above Bar Street**
**Southampton SO9 4GT(GB)**

(54) **Trolleys.**

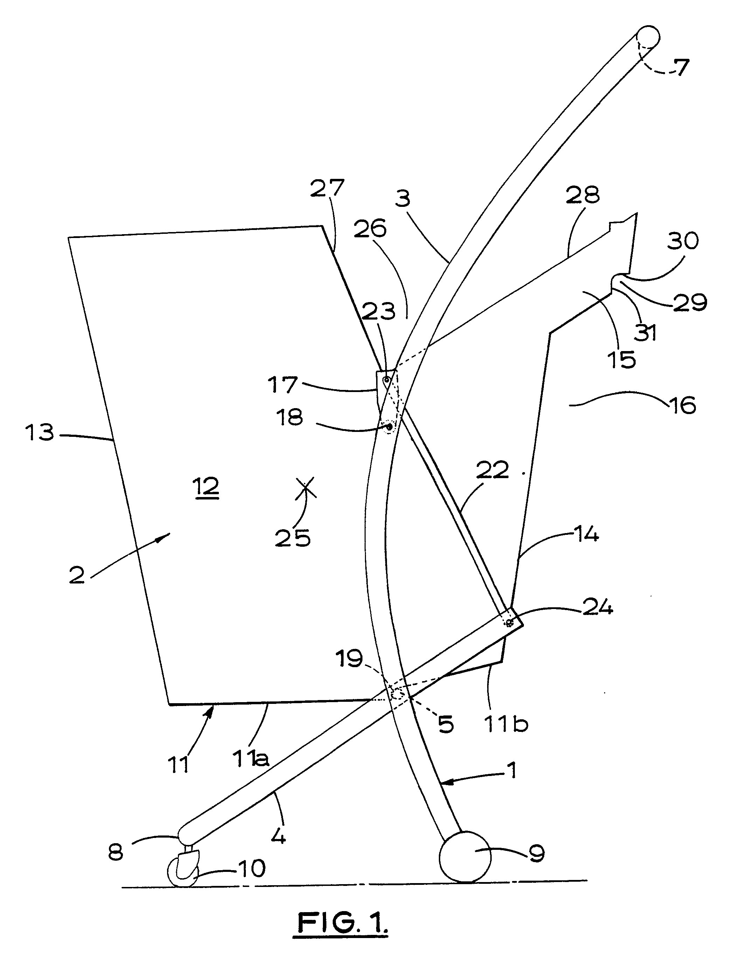

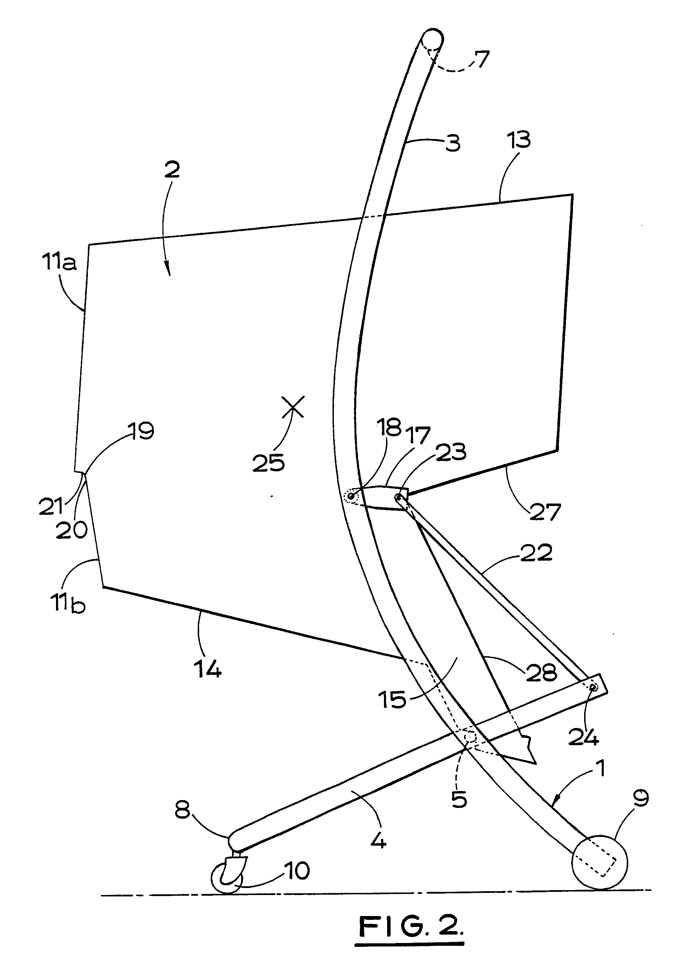

(57) A supermarket trolley has a basket (2) pivotally supported on pivots (18) between a pair of parallel X-frames (1), each frame consisting of a curved first frame member (3) and a shorter, straight second frame member (4) pivotally connected together about the axis of a basket abutment and support rod (5). The basket is capable of being pivoted relative to the frame from a normal, load-carrying orientation (Figure 1) through about 90° to a nestling orientation (Figure 2) and in the latter orientation trolleys can be arranged as a vertical stack or as a horizontal nestled group. The basket is stably held in both its normal and nestling orientations by virtue of the positioning of the centre of gravity (25), and by the action of a pair of control links (22), each link being connected between a point (23) on the basket spaced from the basket pivots (18) and one end (24) of the respective second frame member (4).

FIG. 1.

# TROLLEYS

This invention relates to trolleys, particularly, but not exclusively, to trolleys for use in supermarkets, and to trolleys which are capable of nestling together.

Supermarkets generally provide a choice of hand baskets or relatively large trolleys. Hand baskets are often found by the user to be insufficiently large to carry the goods which he or she considers purchasing whereas conventional trolleys are often unnecessarily large for many customers' purchases. Conventional trolleys take up a great deal of room, both in use and when parked, even though the trolleys are usually capable of being nestled together horizontally, that is arranged in a horizontally extending, interfitting group with the trolley wheels resting on the ground.

The usual nestling trolleys have a wirework basket rigidly mounted in a cantilever manner on a wheeled framework, and the rear vertical wall of the basket is pivotable to enable the front end of another trolley basket to enter into the rear end of an adjacent trolley for nestling of the baskets of the parked trolleys.

I consider that it would be advantageous to be able to stack trolleys vertically since vertical stacks, as with vertical stacks of hand baskets, can more easily be accommodated.

The present invention has resulted from my attempts to design vertically stacking trolleys, but the invention also provides in some embodiments improved arrangements to facilitate horizontal nestling of trolleys which need not necessarily also be intended for vertical stacking.

According to one aspect of the invention a trolley comprises a wheeled framework and a basket supported by the framework characterised in that the arrangement is such that the basket can be turned relative to the framework about a substantially horizontal transverse axis of the framework from a normal orientation, in which goods can be carried, through a substantial angle, such as 90°, to a nestling orientation, the trolley being capable of nestling with an identical trolley when both trolleys have their baskets in the nestling orientation, the baskets of the nestled trolleys interfitting with one another.

By the term "nestling orientation" I mean an orientation of the basket which facilitates nestling together of the baskets of adjacent trolleys, which can be either in a vertical stack of interfitting trolleys and/or in a horizontally-extending nestled group.

The framework may be provided with two wheels only in some cases, but often four wheels will be provided.

I consider it important for reasons of hygiene that the wheels or other ground-engaging parts of the framework, do not rest in or pass through the confines of the basket during stacking, and the relative rotation of the basket and framework can be arranged to carry the wheels outside the plan area of the basket.

The framework preferably comprises a pair of side frames, transversely spaced apart with the basket pivotally suspended therebetween. The pivotal axis will be referred to hereinafter as the 'basket pivotal axis'.

The side frames are preferably X-frames, each comprising a respective pair of crossed first and second frame members, the lower ends of which are adapted to stand on the floor.

The first frame member on each side is preferably longer than the second frame member and extends to a suitable height to support a transverse main handle which is usable for pulling and/or pushing of the trolley in normal use. I refer to a 'main handle' because, as will become apparent, a secondary handle will normally be provided for use when, if desired, the trolleys are to be arranged in a vertical stack, but it should be appreciated that the main handle may in some cases be the only handle.

The main handle is conveniently integral with the material of the upper ends of the first frame members, as when the first frame members and the main handle are bent from a single length of tube.

The first frame members are preferably curved, looking at the trolley from the side, such that the first frame member extends from a ground-engaging wheel, carried by the lower end of that member, rearwardly and upwardly to the pivot of the X-frame, but such that the upper part of the first frame member extends upwardly and forwardly to the main handle, the forwards direction being taken as the direction in which the trolley is pulled by pulling on the main handle (but this is not intended to exclude the possibility that some trolleys will normally be pushed in use).

It is preferably arranged that the basket will rest stably in both its normal orientation and in its nestling orientation without the use of a retaining means since this will avoid the user having to secure and/or release a retaining means when the basket is to be pivoted from one orientation to the other.

Stability against pivoting of the basket in its normal orientation with respect to the frame, in both unloaded and loaded conditions, is preferably facilitated by arranging that the centre of gravity of the unloaded and loaded basket is substantially always positioned rearwardly of the pivotal axis when the trolley is standing normally on the floor or being wheeled around. It is desirable to shape the basket such that if heavy items are put first in the forward part of the basket not too many can be put on the forward side of the basket pivotal axis.

The height of the basket as considered in its normal orientation is preferably on average higher in the rearward part than in the forward part (ie rearwardly and forwardly of the basket pivotal axis) so as to inhibit the piling of an excessive load of goods in the forward part of the basket.

The basket preferably rests against the same abutment on the frame in both the normal and nestling orientations of the basket, and most preferably that abutment is provided by a transverse frame member on the common axis of the two pivots of the X-frames.

The basket preferably comprises a base of joggled shape as viewed in side elevation, the joggle co-operating with the transverse frame member such that the frame member in addition to preventing tilting of the normally orientated basket also helps to support the base of the basket and thereby the load of a loaded basket is shared between the supports for the basket pivotal axis and the transverse frame member.

A basket tilting control assembly is preferably connected between the basket and at least one of the X-frames, the control assembly being arranged such that on tilting of the basket about the basket pivotal axis by the user from the normal orientation to the nestling orientation, the X-frame is partially collapsed, in the sense that the frame members of each X-frame are relatively pivoted so as to lower the common pivotal axis of the X-frames towards the ground (it being understood that the foregoing description refers to the trolley as standing on the ground).

One advantage of this partial collapsing of the X-frames is that the distance between the main and a secondary handle can be substantially reduced on collapsing and the trolley is thereby made more compact for vertical stacking, taking up less floor space. As described hereafter the secondary handle when provided is located in the region of the lower ends of the second frame members (the trolley being considered standing on the floor).

The tilting control assembly preferably comprises at least one linkage which is connected between a point on the basket displaced from the basket pivotal axis and a point on one of the X-frames displaced from the common pivotal axis of the X-frames.

Preferably the linkage is a respective single link associated with each X-frame.

With such an arrangement of the link the basket is encouraged to rest stably in both its normal and stacking orientations without the need for any specific retaining means such as a clip.

The basket is preferably pivotally supported (about the basket pivotal axis) on the upper part of the first frame members, that is on that part of the first frame member which is above the pivotal connection between the first and second X-frame members, the trolley being considered in an upright condition.

The point of connection of the link with the X-frame is preferably then in the upper part of the second frame member, that is at a position on the second frame member which is above the pivotal connection between the first and second frame members.

Conveniently the link connects with the second frame members at the upper end thereof.

The distance between the link connection with the second frame member and the pivotal connection between the frame members is preferably substantially greater than the distance between the link connection with the basket and the basket pivotal axis.

A particular advantage of the linkage arrangement just specified is that the trolley can be picked up by the user, with the basket in its nestling orientation, and the trolley stacked on a vertical stack of trolleys, in which the mouths of the baskets face downwards, without the basket pivoting uncontrollably during the stacking operation.

The point of connection of the link on the basket is preferably substantially vertically above the basket pivotal axis when the basket is in the normal orientation, with the trolley standing on the ground, and the link extends downwards from that point at an acute angle to the vertical, preferably less than $45°$, such that any tendency of the basket to pivot, in its normal orientation, about the basket pivotal axis, results in little longitudinal movement of the link, and accordingly little change in the attitude of the X-frames. On the other hand, when the basket is in the stacking orientation, with the trolley standing on the ground, the link connections are such that any tendency of the basket to pivot with respect to the X-frames about the basket pivotal axis, in the direction towards the normal orientation of the basket, results in a significant upwards expansion of the X-frames.

There are two further expedients which it is desirable to incorporate to achieve stable retention of the basket in at least the nestling orientation without the need for any such retaining means.

The first expedient is to arrange the basket such that the centre of gravity of the unladen basket moves vertically by only a relatively small amount as the basket during pivoting from the normal orientation closely approaches the nestling orientation, compared with the amount of such vertical movement of the centre of gravity which would result from an equal angular movement of the basket when the basket is orientated close to its normal orientation. This is achieved by positioning the basket centre of gravity such that said centre of gravity is horizontally displaced from the basket pivotal axis by a greater amount when the basket is in the normal orientation than when in the nestling orientation, whereby a greater self-righting couple is generated by the weight of the basket when approaching its normal orientation than when approaching its nestling orientation.

Since the basket will generally be substantially heavier than the framework, this reduction in the self-righting couple as the basket approaches the nestling orientation reduces significantly the retaining couple required to be generated by the tilting control assembly (said linkage in the most preferred arrangement).

The second expedient involves choosing the shape of the first frame members of the X-frames such that in the normal orientation of the basket the basket pivotal axis is substantially vertically above the common pivotal axis of the X-frame, but that in the nestling orientation the basket pivotal axis is substantially displaced in the rearward direction from the vertical extending through said common pivotal axis.

The effect of adopting this second expedient is that in the normal orientation of the basket the basket load exerted through the basket pivots to the first frame members exerts substantially no leverage on the first frame members about said common pivotal axis, but in the nestling orientation the basket load exerted through the basket pivots on the first frame members represents a substantial leverage on the first frame members about said common pivotal axis. This leverage acts to tend to collapse the X-frames, thereby tending to exert substantial pulls on the linkages, thereby assisting substantially in holding the basket tipped in the nestling orientation.

The lower ends of the second frame members are preferably connected by a transverse strut which is usable as a secondary handle by the user in picking up the trolley to stack it on a vertical stack. The user can grasp the main handle with one hand, and the secondary handle with the other hand, and can then lift up the trolley and place it on the stack. Since the user's arms will be somewhat outstretched during this action, and since the body generally tends to draw the hands towards each other during such operation, the X-frame will be naturally subjected to a compressive force acting between the 'upper' ends of the first frame members and the 'lower' ends of the second frame members, and because of the aforedescribed geometry of the linkage, the linkage will react to this compressive force to tend to hold the basket in the nestling orientation relative to the frame, even though the whole trolley is being pivoted by the user through 90° for placing on the vertical stack of trolleys.

I envisage providing a suitable stacking location mounted on or above the supermarket floor to receive and locate the first trolley when creating a vertical stack. The stacking location could be, for example, a trolley basket fixedly mounted on rigid legs which may be furnished with castors to enable the stack to be pushed around the supermarket to any desired location.

If the trolleys are capable of being stacked in a vertical stack with the mouths of the baskets facing downwards, it follows that they are also capable of being stacked, if desired, with the mouths of the baskets facing upwards. If such mouth-upwards stacking is required, it may be desirable to provide a retention means for holding the basket in the nestling orientation during the picking-up of the trolley from the ground, because the user will tend to hold the main handle with one hand and some transverse strut interconnecting the lower parts of the first frame members with the other hand, and such handling does not exert any compressive force tending to collapse the X-frames.

Alternatively the secondary handle can be designed such that the user in grasping the secondary handle is forced also to grasp a formation on the basket which lies alongside the secondary handle when the basket is in the nestling orientation. In that case the secondary handle may be constituted by a transverse frame member on the common pivotal axis of the X-frames.

The basket is preferably provided at each side with a spacer block rigid therewith, the basket pivotal connection with the frame being provided by a pivotal connection between the lower part of the spacer block and the adjacent frame member, the arrangement being such that the upper end of one spacer block is engaged by the lower end of the spacer block of the adjacent trolley in the stack (upper and lower end being with regard to the basket in its normal orientation, mouth upwards).

The link pivotal connection with the basket is then preferably made with the upper end of the respective spacer block.

The sides of the basket, as viewed with the mouth upwards, preferably have a V-shaped upper margin, the lower end of the V being directed at the spacer block, such that baskets during stacking tend to be assisted towards the nestled condition by co-operation between the spacer blocks on one basket and the V-shaped upper margin of the adjacent basket into which said basket is being fitted.

A trolley in accordance with the invention will now be described, by way of example only, with reference to the accompanying drawings, in which:

Figure 1 is a side elevation of the trolley shown resting on the floor with the basket in the normal orientation thereof;

Figure 2 is a side elevation of the trolley shown resting on the floor with the basket in the nestling orientation;

Figure 3 is an underplan view of the trolley with the basket in the nestling orientation shown in Figure 2;

Figure 4 is an underplan view of a trolley in a vertical stack position as in Figure 6;

Figure 5 is a side elevation of two of the trolleys nestled together horizontally; and

Figure 6 is a side elevation of two trolleys stacked together in a vertical stack with the mouths of the baskets facing downwards.

With reference to Figures 1 and 2, the trolley comprises a wheeled framework 1 within which is pivotally supported a basket 2, shown in its normal orientation in Figure 1, and which is capable of being pivoted substantially through 90° to a nestling orientation of the basket, shown in Figure 2.

The framework 1 comprises a pair of X-frames, each comprising a relatively long, tubular first frame member 3 and a relatively short, tubular second frame member 4 pivotally connected together about a common horizontal, transverse pivotal axis provided by a transverse rod 5 on which a plurality of locating members, such as transverse pins 6, have been secured.

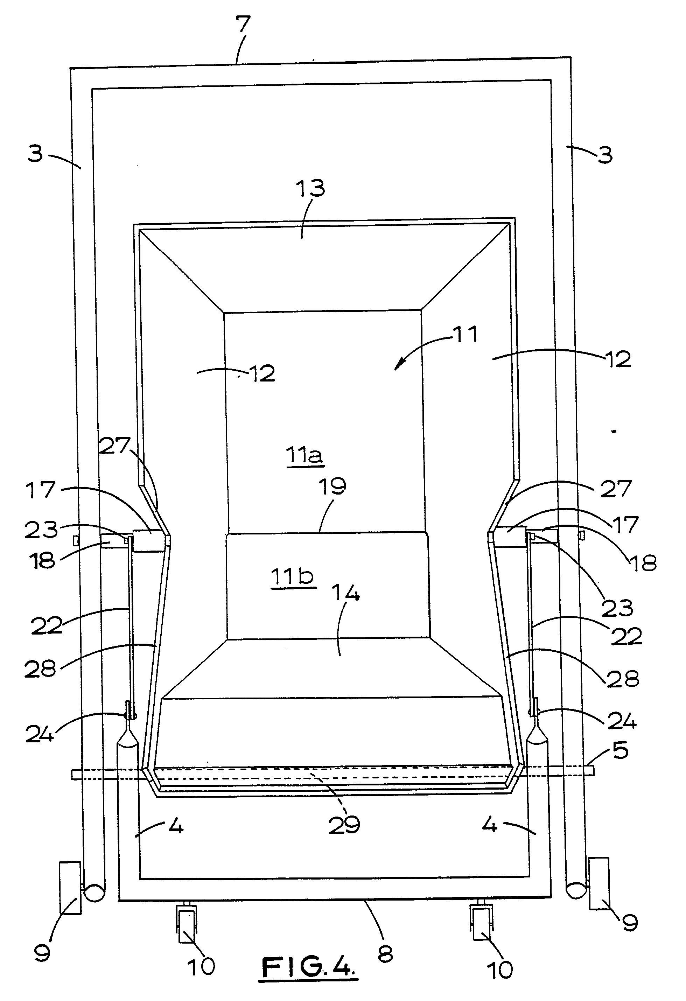

The first frame members 3 are markedly curved, as viewed in side view in Figure 1, such that proceeding upwards from the rod 5 the members 3 initially extend upwardly and rearwardly (the forward direction of normal travel of the trolley being towards the right in Figure 1, this being the direction in which the trolley is pulled by the user) and then upwardly and forwardly to a horizontal main handle 7. The main handle 7 is conveniently integral with the members 3, as shown in Figure 4.

The second frame members 4 are straight and integrally connected at their lower ends by a transverse horizontal limb 8. Main support wheels 9 are trunnioned on the outside of the lower ends of the respective first frame members 9, and subsidiary wheels 10, in the form of castors, are carried by the horizontal limb 8. If desired the wheels 10 may be replaced by a single central wheel, or by feet because in normal use of the trolley the trolley is pulled by the handle 7 which tends to tilt the trolley about the axis of main wheels 9 to lift the wheels 10 clear of the floor. However, it is preferred to provide two wheels 10 to give the trolley maximum manoeuvrability when being pushed.

In a modification, not illustrated, the wheels 9 are mounted in line with frame members 3 on suitable support blocks secured in the ends of frame members 3.

The basket comprises a base 11, a pair of sidewalls 12, and endwalls 13 and 14, the basket reducing in width and length in the downward direction, such that the rectangular base 11 is of substantially less area than that of the substantially rectangular mouth defined by the upper edges of the walls 12, 13 and 14.

As shown in Figure 1 the front endwall 14 is cranked to define a forwardly overhanging basket portion 15 for a purpose to be explained, and to define a recess 16 to accommodate the stride of the leg of the user when the user is pulling the trolley. The heel of the user's shoe is less likely to foul the bottom front corner of the basket as the trolley is pulled behind.

The sidewalls 12 each rigidly carry a vertical spacer and guide block 17, the lower end of which carries the pivotal connection 18 with the respectively adjacent first frame member 3.

The pair of pivotal connections 18 provide the basket pivotal axis about which the basket can pivot relative to the frame, and some of the weight of the loaded basket in use is taken by those pivotal connections 18.

The majority of the weight of the loaded basket is taken by the engagement between the joggled base 11 and the rod 5. The joggle 19, shown most clearly in Figure 2, provides both a support surface 20 for carrying most of the total basket weight, and a substantially vertical (in Figure 1) abutment face 21 (see Figure 2) which engages with the rod 5 to prevent counter-clockwise rotation of the basket relative to the framework from the normal orientation shown in Figure 1.

A basket tilting control assembly is constituted by a pair of parallel links 22 of flat bar, one to each side of the basket, the upper end of each link being pivotally connected at 23 to the outside of the upper end of the respective block 17, and the lower end being pivotally connected at 24 to the inside of the upper end of the respective second frame member 4. As shown in Figure 1 the link 22 is inclined at substantially 30° to the vertical.

The centre of gravity of the empty basket is roughly at the position indicated by 25 in Figure 1 and it will be seen that this has been arranged deliberately to be rearwards of the vertical through the basket pivotal axis 18. This means that the basket 2 in its normal orientation shown in Figure 1 is biased by its own weight to attempt to turn anti-clockwise about axis 18 but that this is resisted by the engagement between joggle 19 (surface 21) and the rod 5. Thus the position of the basket's centre of gravity provides a self-righting couple which opposes any tendency of the basket to tilt clockwise from the normal orientation shown in Figure 1.

The linkage constituted by the two links 22 is also arranged such that if the basket were to be displaced slightly in a clockwise direction from its normal orientation, substantially no help is provided by the links 22 to encourage that movement, whereby the basket will pivot back into abutment with rod 5 due to the offsetting of the centre of gravity 25 from the basket pivotal axis 18. The link 22 does not provide any significant assistance to clockwise movement (in Figure 1) of the basket because in the normal orientation of the basket the pivot point 23 is above axis 18 (essentially in a near top-dead-centre position) and the three points 23, 18 and 24 are roughly in line, whereby any slight pivoting of the basket does not lead to any significant longitudinal movement of link 22 as would significantly affect the attitude of the X-frames. Since the links 22 extend at only a small angle to the line joining points 23 and 18, a relatively large force would need to be exerted on the links 22 to cause basket 12 to pivot from its normal orientation, and such a large force is not generated by the tendency of the X-frames to collapse under the weight of the basket.

It will be noted that the rod 5 acts as the control abutment for the basket in both the normal and stacking orientations of the basket.

The angle between lines connecting the basket pivotal axis 18 with the joggle 19 and with the recess 29 is approximately 120° in this embodiment but variations from this would be possible.

The basket is shaped to encourage loading by the user such that the centre of gravity of the load tends to be rearwards of the axis 18. The area 11a which is rearwards of axis 18 is larger than the area 11b, which is forward of axis 18, such that in general more load will be placed to the rear of axis 18. In addition a V-shaped cut-out 26 is defined by upper edges 27, 28 in the basket sidewalls 12, and this inhibits high-piling of goods in the forward part of the basket.

The portion 11b of the base 11 is inclined to the horizontal, as viewed in Figure 1, to provide clearance between basket base 11 and rod 5 on pivoting of the basket about axis 18.

In Figure 1 it will be seen that the basket pivotal axis 18 is substantially vertically above the rod 5 which provides the pivotal axis for the X-frames, and this is considered to be advantageous.

The trolley will normally be pulled in use by the user who will hold the handle 7, and if desired the trolley can be tipped when being pulled such that wheels 10 are no longer in contact with the ground. The wheels 9, support and abutment rod 5, and basket pivotal axis 18 have been positioned such that when a loaded trolley is tilted about the axis of wheels 9 the centre of gravity of the laden basket 2 is moved closer into vertical alignment with the wheels. This produces an approximately neutral balance at the handle which means that the user is not struggling to control the trolley under the weight of the goods in the basket.

When it is desired to prepare the trolley for nestling, in either a horizontal nestled group or vertical stack, the user must physically rotate the basket clockwise, as viewed in Figure 1, through approximately 90° to bring the basket to the nestling orientation shown in Figure 2 in which the basket portion 15 engages with the rod 5. The basket portion 15 is provided, in side view, with a cut-out 29 defined by mutually perpendicular walls 30, 31 (Figure 1) which locate firmly against rod 5.

In the nestling orientation of the basket shown in Figure 2 the basket is held stably against pivoting back towards the normal orientation by the links 22, which are themselves held by the X-frame, due to the fact that any movement of the links 22 in the upward direction will result in upward movement of link connection 24 relative to the floor and consequent upward extension of the X-frames. Such upward extension of the X-frames will lift the axis 18 and thus tend to lift the basket.

There are various factors which are operative to assist in retaining the basket stably in the nestling orientation shown in Figure 2 and these will now be listed, not necessarily in the order of relative importance:

(i) The effective length of the lever arm provided, by blocks 17 between links 22 and the basket about basket pivotal axis 18, is greater in the nestled orientation of Figure 2 than the effective lever arm in the normal orientation of Figure 1.

(ii) The basket pivotal axis 18, which transmits the basket load to the first frame members 3 is substantially displaced horizontally from the common pivotal axis 5 of the X-frames in the nestled orientation of Figure 2, whereas in the normal orientation of Figure 1 there is substantially no such horizontal displacement. Thus, in the nestled orientation, the basket is in effect exerting a substantial leverage about point 5 in the sense to collapse the X-frames, and the resulting tendency to collapse generates a substantial pull on the links 22.

(iii) The centre of gravity 25 of the basket is arranged to be significantly above the level of the basket pivotal axis 18 in the nestled orientation of Figure 2, such that any slight tendency of the basket to tilt from the nestled orientation will result in only a small change in the vertical height of the centre of gravity 25, and accordingly this will not generate any significant self-righting couple on the basket.

Put another way, the horizontal displacement of the centre of gravity 25 from the basket pivotal axis 18 is less in the nestling orientation of Figure 2 than in the normal orientation of Figure 1, and therefore the self-righting couple in the nestling orientation is less than in the normal orientation.

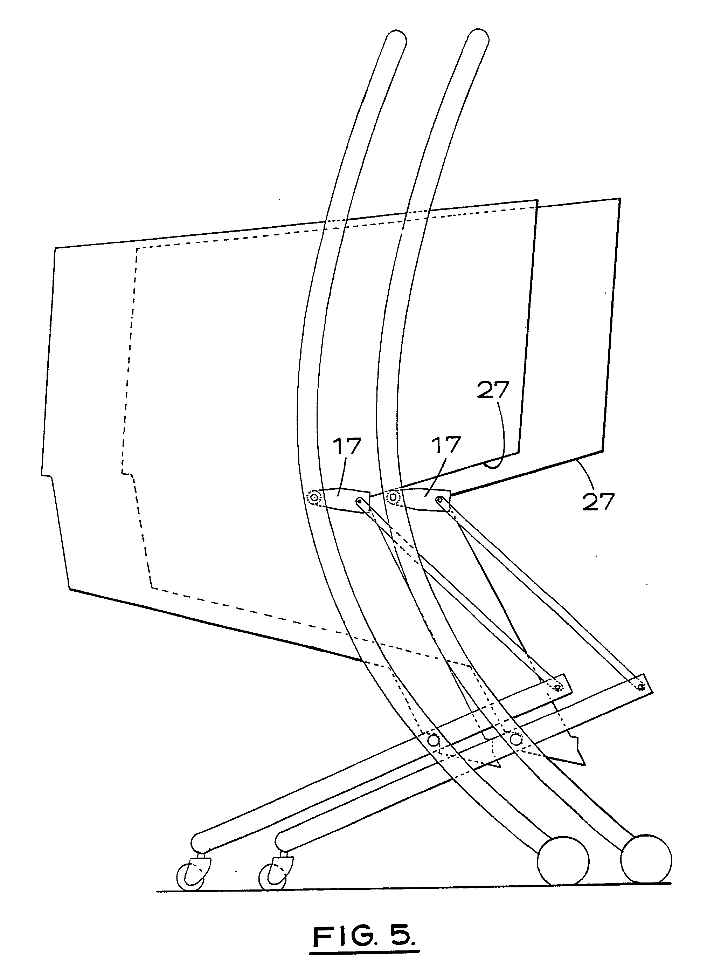

In the nestling orientation of the basket shown in Figure 2 the wheels 9, 10 are well-removed from the plan area of the basket so that when baskets are nestled horizontally, as shown in Figure 5, the wheels 9, 10 come nowhere near the interior of the baskets, which do not therefore become soiled by the wheels.

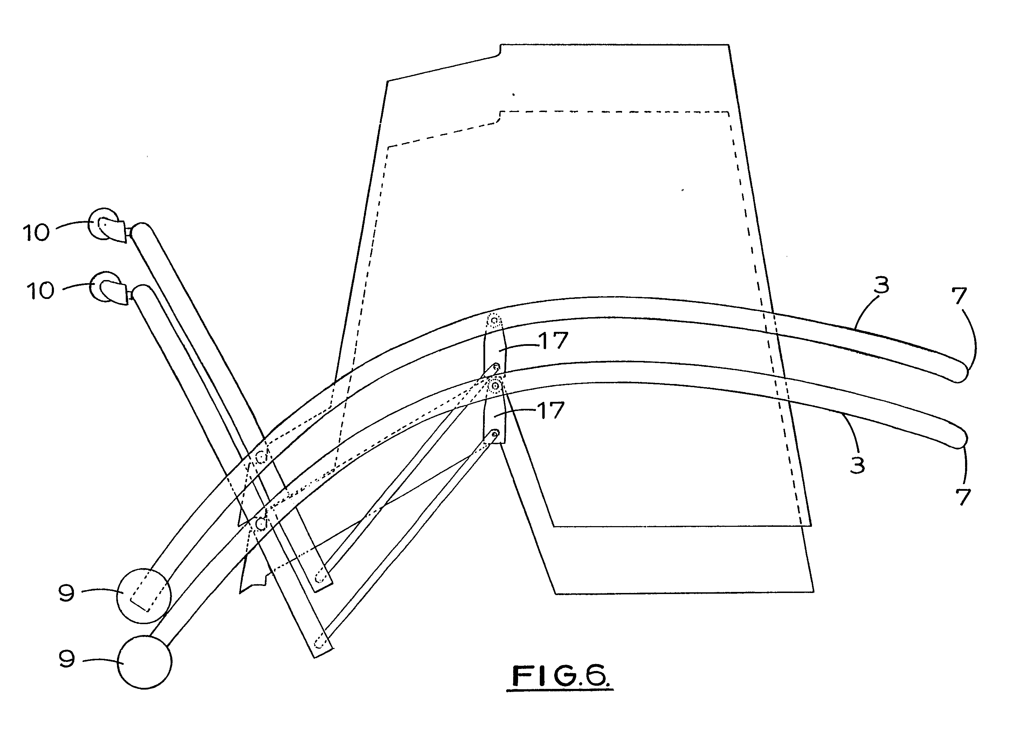

As shown in Figure 5 the trolleys with the baskets in the nestling orientation can be nestled together to form a horizontal interfitting group, the tapering shape of the baskets permitting interfitting of the baskets without interlocking. The spacing of the trolleys in the horizontal nestling arrangements is determined, as shown in Figure 5, by the engagement of the blocks 17 with the basket edges 27 of the adjacent basket. This is slightly different from what happens when the trolleys are stacked in a vertical stack where, as shown in Figure 6, the spacer blocks 17 engage one another to determine the spacing.

When the user, or supermarket staff, wishes to put a trolley on a vertical stack like the stack of Figure 6, that person brings the trolley to the condition shown in Figure 2, and then holds the main handle 7 with one hand and holds the transverse limb 5 with the other hand, and he or she then lifts the trolley through 90° to place it on top of the existing stack. Thus the transverse limb 8 constitutes a secondary handle for use when vertically stacking, or unstacking, the trolleys.

Since the tubular frame 1 can be made of aluminium alloy or other lightweight material, and the basket 2 can be made of plastics or other light materials, the trolley can be made of a size which can readily be lifted by the user. In general the capacity of the basket 2 will be intermediate to that of hand-baskets and currently available conventional supermarket trolleys, but if only horizontal nestling as in Figure 5 were to be required, the basket could be made as large as that of the larger conventional trolleys.

For large baskets I envisage a modification in which the handle 7 and upper extremities of members 3 are dispensed with, a pulling handle being formed on basket portion 15, or at the top edge of endwall 13.

When the user grasps the main handle 7 and secondary handle 8 of the illustrated trolley the arms of the user naturally tend to bring the hands towards each other rather than allowing the hands to move apart, and this tendency helps to hold the basket in the nestling orientation relative to the frame whilst the trolley is being rotated by the user from the Figure 2 position to that required for placing the trolley on the stack of Figure 6. This is because the X-frames are being compressed (vertically as viewed in Figure 2) which thereby retains the links 22 against movement, the links in turn holding the basket in the nestling orientation.

If it was desired to stack the trolleys in a vertical stack with the mouths of the baskets facing upwards then it would be possible to omit the frame limb 8 and to provide hand holes in the basket adjacent to recess 29, such that the user could use one hand to grip the rod 5 and simultaneously grip the portion 15 of the basket, instead of frame limb 8, whilst the other hand is used to hold the main handle 7.

When the trolleys are being placed on top of one another to form a vertical stack the blocks 17 help to guide the next trolley into a fully nestled condition by engagement, during the final stages of nestling, between the rounded end of the block with surface 27, this surface being arranged to extend towards the blocks 17 on the respective basket. This occurs because, as shown in Figure 4, the outward inclination of the basket sides 12 brings the surface 27 into the plane of the blocks 17 of the adjacent basket.

The links 22 on adjacent trolleys also interengage during the final stages of the nestling process to assist in guiding the baskets to a fully nestled condition.

The blocks 17 perform the important function in a vertical stack of bearing most of the weight of trolleys above, and accordingly the transverse dimensions of the blocks 17 are made wide to support a large stack. The cut-outs 26 facilitate blocks of large transverse dimensions which can still contact blocks of adjacent stacked trolleys.

One advantage of the partial collapsing of the X-frames when a basket is put in a nestling orientation is that the second frame members do not project outwardly from the basket as much as they otherwise would when the trolley is stacked vertically and the trolley is thereby made more compact for vertical stacking with a saving in the overall length of each trolley in the vertical stack reducing the floor space needed to accommodate a vertical stack of trolleys.

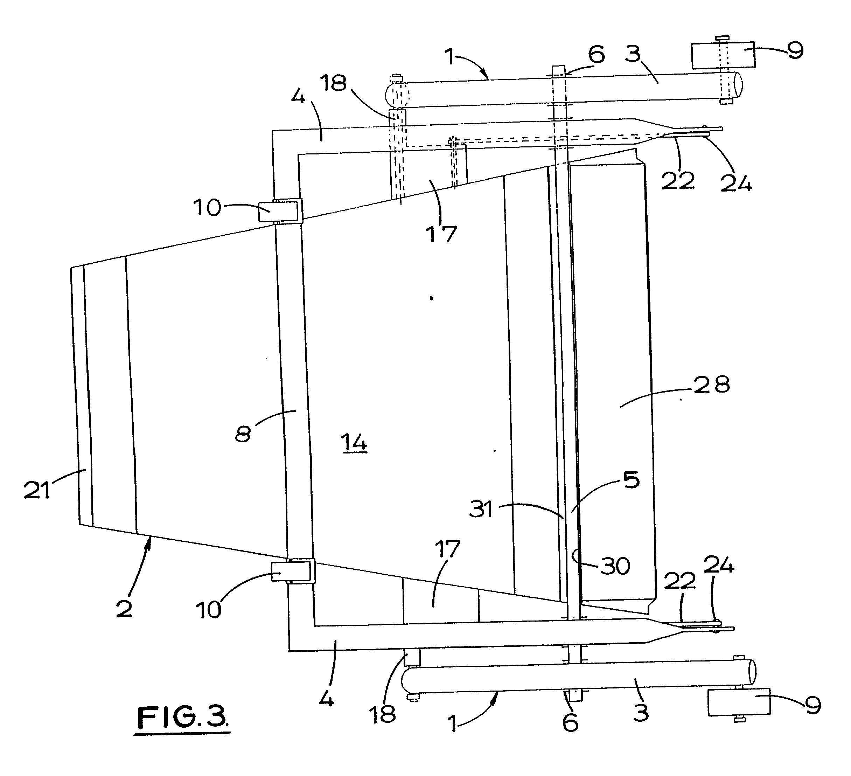

It will be noted from Figures 3 and 4 that the second frame members 4 are positioned transversely inside of the first frame members 3 to facilitate close stacking. The links 22 are positioned transversely inside of the main wheels 9 and first frame members 3 to avoid any fouling between links 22 and the first frame members 3 and to allow the links 22 and second frame members 4 of one trolley to pass inside of the first frame members of the adjacent trolley when stacking these trolleys together.

Unstacking of horizontally nestled trolleys is essentially the reverse operation to nestling, except that when a trolley has been separated from the nestled group in the condition shown in Figure 2 it is possible for the user, rather than manually tipping the basket, to lift the main handle briefly, which will allow the basket to rotate anti-clockwise under its own weight about basket pivotal axis 18, back to the normal condition of Figure 1.

Unstacking of vertically stacked trolleys and bringing the trolleys to the normal basket orientation of Figure 1 is achieved in a very simple and efficient manner. The user simply grasps the trolley by the main handle 7 and secondary handle 8, lifts the trolley off the stack and then releases the secondary handle 8. The trolley frame 1 will then swing downwards towards the floor, about the main handle 7, but at the same time the basket 2 will pivot automatically from the nestled orientation to the normal orientation. This occurs because the X-frame tends to be extended by the user holding only the main handle 7, and extension of the X-frame relieves any tensile force on the links 22. The basket 2, of course, pivots automatically by reason of its off-set centre of gravity 25.

## Claims

1. A trolley comprising a framework (1) provided with wheels (9, 10) and a basket (2) supported by the framework, characterised in that the arrangement is such that the basket can be turned relative to the framework about a substantially horizontal transverse axis (18) of the framework from a normal orientation (Figure 1), in which goods can be carried, through a substantial angle to a nestling orientation (Figure 2), the trolley being capable of nestling with an identical trolley when both trolleys have their baskets oriented in the nestling orientation, the baskets of the nestled trolleys interfitting with one another.

2. A trolley as claimed in claim 1 in which the framework comprises a pair of side frames (3, 4) which are transversely spaced apart with the basket suspended therebetween about a basket pivotal axis (18).

3. A trolley as claimed in claim 2 in which the side frames each comprise an X-frame, each X-frame comprising a respective pair of crossed first and second frame members (1, 2), the lower ends of the frame members being capable of standing on the floor, the wheels (9, 10) being carried by lower ends of at least the first frame members (1).

4. A trolley as claimed in claim 3 in which the first frame member (3) on each side is longer than the second frame member and supports at its upper end a transverse main handle at a convenient height to permit pulling and/or pushing of the trolley by the user.

5. A trolley as claimed in claim 4 in which the first frame members are curved such that, looking at the trolley from one side with the trolley standing on the floor and with the basket in its normal orientation, the first frame member (3) extends from a ground-engaging wheel (9) rearwardly and upwardly to the pivotal axis (5) of the X-frame, and such that the upper part of each first frame member extends upwardly and forwardly to the main handle (7) (the forwards direction being taken as the direction in which the trolley is pulled by pulling on the main handle).

6. A trolley as claimed in any one of claims 3 to 5 in which a basket tilting control assembly (22) is connected between the basket and at least one of the X-frames, the control assembly being arranged such that on manual tilting of the basket about the basket pivotal axis from the normal orientation to the nestling orientation, the X-frame is constrained by the control assembly to collapse partially.

7. A trolley as claimed in claim 6 in which the tilting control assembly comprises at least one linkage which is connected between a point (23) on the basket displaced from the basket pivotal axis, and a point (24) on one of the X-frames displaced from the common pivotal axis of the X-frames.

8. A trolley as claimed in claim 7 in which the pivots (18) for the basket are supported on the first frame member (3) at a position located above the common pivotal axis (5) of the X-frames (the trolley being considered standing normally on the floor), and the point (24) of connection of the link (22) with the frame is at a point (24) on the second frame member (4) which is closer to the common pivotal axis of the X-frames than is the basket pivotal axis (18) from said common pivotal axis.

9. A trolley as claimed in any one of claims 6 to 8 in which the arrangement is such that the centre of gravity (25) of the basket is disposed horizontally further from the basket pivotal axis when the basket is in its normal orientation than when the basket is in its nestling orientation (the trolley being considered standing normally on the floor).

10. A trolley as claimed in any one of claims 6 to 9 in which the the arrangement is such that the basket pivotal axis (18) is substantially vertically above the common pivotal axis (5) of the X-frames when the basket is in its normal orientation, but the basket pivotal axis is displaced horizontally by a substantial amount relative to said common pivotal axis, on pivoting of the basket from the normal orientation to the nestling orientation.

## FIG. 1.

**FIG. 2.**

FIG.3.

EP 0 403 702 A1

## FIG.4.

27

17    17

27

FIG. 5.

EP 0 403 702 A1

10

10

3

7

17

17

3

7

9

9

FIG.6.

European Patent
Office

**EUROPEAN SEARCH REPORT**

Application Number

EP   89 30 6307

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3536283 (J. Y. LOWE)<br>* the whole document * | 1-7, 10 | B62B3/10 |
| A | | 8, 9 | |
| | --- | | |
| X | GB-A-968950 (G. O. ALTON)<br>* the whole document * | 1, 2 | |
| A | | 3, 9 | |
| | --- | | |
| X | US-A-2776843 (G. A. JUST)<br>* the whole document * | 1, 2 | |
| | ----- | | |

TECHNICAL FIELDS
SEARCHED (Int. Cl.5 )

B62B

The present search report has been drawn up for all claims

| Place of search | Date of completion of the search | Examiner |
|---|---|---|
| THE HAGUE | 20 FEBRUARY 1990 | FRANKS B.G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P0401)